# EUROPEAN PATENT APPLICATION

(11) **EP 2 738 494 A1**
(43) Date of publication of application: **04.06.2014**
(21) Application number: 12195093.5
(22) Date of filing: 30.11.2012
(51) Int. Cl.: F25D 1/00, F25C 1/02

(54) **Method and system for converting water into ice**

(71) Applicant: Shell Internationale Research Maatschappij B.V., 2596 HR The Hague (NL)
(72) Inventor: Ruggier, Michael, Ho Blairs, Aberdeen AB12 5YX (GB); Verduyn, Marinus Aris, 1031 HW Amsterdam (NL)
(74) Representative: Matthezing, Robert Maarten

(57) **Abstract**

An energy-efficient freezing technique for converting water into ice comprises:
- providing a pair of containers(1,2) that are at least partially filled with water and are each carried by a balloon(3,4);
- interconnecting the balloons(3,4) with an U-shaped connection cable(5) that runs via a pulley assembly(6,7) at the earth surface(8);
- cyclically induce one of the balloons(3) to lift one of the containers(1) to an altitude above a freezing level(11) in the atmosphere(13) thereby converting the water in that container(1) into ice(12) and to simultaneously induce the U-shaped connection cable(5) to pull the other balloon(4) and water container(2) assembly back to the earth surface(8); and
- each time when one of the containers(1,2) has been cyclically pulled back to and descended on the earth surface:
- removing the ice(12) from the descended container(1,2) generated by prior lifting of the descended container(1,2) to the altitude above the freezing level(11) in the atmosphere(13); and
- re-filling the descended container(1,2) with water.

## Description

### BACKGROUND OF THE INVENTION

The invention relates to a method and system for converting water into ice.

It is known from US patent application US 2012/0031119 to cool water or another heat transfer fluid by lifting a container to an altitude where the ambient atmospheric temperature is below 0 Degrees Celsius, such that the water or other fluid freezes, whereupon the balloon is pulled back to the earth surface and the ice is removed from the container and can be used as a cold medium. The lifting and descending of the balloon still requires a significant amount of energy.

Other known refrigeration techniques using a refrigerator in which a heat transfer medium is cyclically evaporated and condensed also require significant amounts of energy.

There is a need for a freezing technique for converting water into ice, which is more energy efficient than the known freezing techniques.

Furthermore there is a need for a freezing technique that can be used to generate substantial quantities of ice in remote areas without electrical power supply.

In addition there is a need for a freezing technique that can be used to convert substantial quantities of salt containing water into desalinated ice and brine in an energy-efficient manner.

### SUMMARY OF THE INVENTION

In accordance with the invention there is provided a method for converting water into ice, the method comprising:
- providing a first container that is at least partially filled with water and is carried by a first balloon that is filled with a medium with a lower density than ambient air in the atmosphere;
- providing a second container that is at least partially filled with water and is carried by a second balloon that is filled with a medium with a lower density than ambient air in the atmosphere;
- interconnecting the first and second balloon via an U-shaped connection cable that runs via a pulley assembly at the earth surface;
- cyclically induce one of the balloons to lift one of the containers to an altitude above a freezing level in the atmosphere thereby converting the water in that container into ice and to simultaneously induce the U-shaped connection cable to pull the other balloon and water container back to the earth surface; and
- each time when one of the containers has been cyclically pulled back to and descended on the earth surface:
- removing the ice from the descended container generated by prior lifting of the descended container to the altitude above the freezing level in the atmosphere; and
- re-filling the descended container with water.

The pulley assembly may comprise a pair of pulleys mounted at a selected mutual distance at the earth surface such that the risk of entangling of the U-shaped cable sections and collision of the balloons and containers is minimized and the length of the U-shaped connection cable may be adjustable to the altitude of the freezing level in the atmosphere.

The descended container may be re-filled with salt containing water which is separated into substantially salt free ice and brine when the container reaches the freezing level in the atmosphere, whereupon the ice may be converted into fresh water after the container has descended to the earth surface.

The first and second balloons may be hot air balloons in which the air is heated after the container carried thereby has been re-filled with water.

Alternatively the first and second balloons may be filled with a medium, such as helium, that has a lower density than air at ambient temperatures and more of the medium is injected into the balloon after the container carried thereby has been re-filled with water.

In accordance with the invention there is furthermore provided a system for converting water into ice, the system comprising:
- a first container that is configured to be at least partially filled with water and to be carried by a first balloon that is filled with a medium with a lower density than ambient air in the atmosphere;
- a second container that is configured to be at least partially filled with water and to be carried by a second balloon that is filled with a medium with a lower density than ambient air in the atmosphere;
- an U-shaped connection cable that interconnects the first and second balloon via an U-shaped connection cable and that runs via a pulley assembly at the earth surface;
- means for cyclically inducing one of the balloons to lift one of the containers to an altitude above a freezing level in the atmosphere thereby converting the water in that container into ice and to simultaneously induce the U-shaped connection cable to pull the other balloon and water container back to the earth surface; and
- means for removing the ice from the descended container generated by prior lifting of the descended container to the altitude above the freezing level in the atmosphere; and
- means for re-filling the descended container with water.

The first and second containers may be made of a flexible material, which is configured to absorb expansion of the freezing water when the container reaches the freezing level in the atmosphere.

These and other features, embodiments and advantages of the method and/or system according to the invention are described in the accompanying claims, abstract and the following detailed description of non-limiting embodiments depicted in the accompanying drawing, in which description reference numerals are used which refer to corresponding reference numerals that are depicted in the drawing.

### BRIEF DESCRIPTION OF THE DRAWING

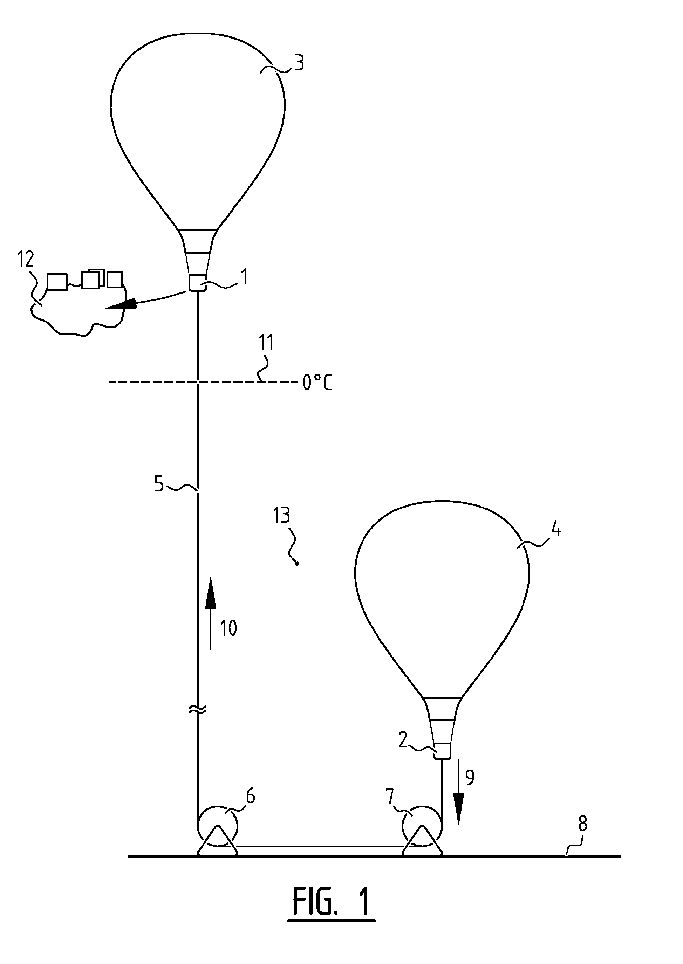

Figure 1 shows an assembly of a pair of water containers carried by a pair of interconnected balloons in accordance with the present invention.

### DETAILED DESCRIPTION OF THE DEPICTED EMBODIMENTS

Figure 1 shows an assembly of a pair of water containers carried by a pair of interconnected balloons in accordance with the present invention.

The assembly comprises a first flexible container 1 that is at least partially filled with water and is carried by a first balloon 3 and a second flexible water container 2 that is at least partially filled with water and is carried by a second balloon 4.

The first and second balloon and container assemblies 1-4 are interconnected by a U-shaped connection cable 5 that runs via a pair of pulleys 6 and 7 that are mounted on the earth surface 8.

The U-shaped connection cable induces the second balloon water container assembly 2,4 to descend to the earth surface as illustrated by arrow 9 if the first balloon and water container assembly 1,3 is allowed to ascend in upward direction to an elevated altitude and vice versa.

If the first balloon and water container assembly 1,3 reaches an altitude above the altitude 11 at which the ambient air temperature is 0 degrees Celsius the ambient temperature will drop below 0 degrees Celsius and the water in the container will start to freeze and is converted into ice 12.

After at least a substantial fraction of the water in the first water container 1 is converted into ice the first balloon and water container assembly 1,3 is pulled the connection cable 5 back the earth surface 8. The pulling action of the connection cable 5 is at least partially induced by releasing the second water container and balloon assembly 2,4 from the second pulley 7, so that the two interconnected balloons induce each other to alternatingly and cyclically move up and down in an energy efficient manner.

The balloons 3 and 4 thereby alternatingly lift the flexible containers 1 and 2 with water into the sky 13. When one of the flexible water containers 1 or 2 is high enough, the water within the container 1 or 2 freezes over time when the container is above the altitude at which the ambient air temperature is 0 degrees Celsius due to heat loss from the container to the surrounding troposphere (1^{st} layer of the atmosphere), and then brought back to the earth surface 8 where the ice 12 is used.

By connecting two balloons 3 and 4 with a connection cable 5 that runs via a pair of pulleys 6 and 7 as shown in Figure 1, one balloon 3 is pulled down by the connection cable 5 , while the other balloon 4 goes up. Because the weights of the balloons 3 and 4 and water containers 1 and 2 balance, this cycle will require very little energy (as should basically be the friction of the system, which will be independent to the heat losses/gains).

Water is nature's "energy carrier". It stores a lot of energy, especially by its freezing and evaporation. Melting 1 ton of water corresponds to about one hundred light bulbs of 40 W burning all day and night.

Remote, small villages with no access to electricity can benefit from the cooling method according to the invention. A local company could operate the balloon assembly 3,4 and produce, sell and distribute the ice 12 in neighbouring villages. The ice 12 then allows the transport and selling of food to places further away. Less food will rot or the producer held ransom by a local buyer. The income can be used to pay for the ice 12.

This model would benefit the local community by creating employment, reducing waste, improving health and better food hygiene. This would improve quality of life and would put remote villages back onto the map.

Fresh food itself could also be sent up directly where it is frozen using the balloon assembly 3,4 and then transported or stored locally in ice houses, as other cultures did often in earlier days.

It will be understood that the containers 1 and 2 should be made of a flexible material to allow for the thermal expansion of the freezing ice 12 and may be thermally insulated, but contain ventilation openings through which cold air may enter the interior of the container 1 or 2 when the ambient air temperature is below 0 degrees Celsius, but which openings are closed by a temperature responsive valve which automatically closes the openings when the ambient temperature rises to above 0 degrees Celsius.

After one of the containers 1 or 2 has descended to at the earth surface the ice is removed therefrom and it is re-filled with water. The water may contain salt, in which case the ice generated after lifting the container to above the 0 degrees Celsius altitude comprises fresh water, whereas the remaining unfrozen quantity of water becomes a brine with elevated salinity, so that the container also functions as a desalination unit in which desalinated ice is separated from high salinity brine, which is disposed, whereas the desalinated ice may be used as a source for drinking water and/or other consumption.

## Claims

1. A method for converting water into ice, the method comprising:
- providing a first container that is at least partially filled with water and is carried by a first balloon that is filled with a medium with a lower density than ambient air in the atmosphere;
- providing a second container that is at least partially filled with water and is carried by a second balloon that is filled with a medium with a lower density than ambient air in the atmosphere;
- interconnecting the first and second balloon via an U-shaped connection cable that runs via a pulley assembly at the earth surface;
- cyclically induce one of the balloons to lift one of the containers to an altitude above a freezing level in the atmosphere thereby converting the water in that container into ice and to simultaneously induce the U-shaped connection cable to pull the other balloon and water container back to the earth surface; and
- each time when one of the containers has been cyclically pulled back to and descended on the earth surface:
- removing the ice from the descended container generated by prior lifting of the descended container to the altitude above the freezing level in the atmosphere; and
- re-filling the descended container with water.

2. The method of claim 1, wherein the pulley assembly comprises a pair of pulleys mounted at a selected mutual distance at the earth surface such that the risk of entangling of the U-shaped cable sections and collision of the balloons and containers is minimized.

3. The method of claim 1 or 2, wherein the length of the U-shaped connection cable can be adjusted to the altitude of the freezing level in the atmosphere.

4. The method of any one of claims 1-3, wherein the first and second containers are made of a flexible material, which is configured to absorb expansion of the freezing water when the container reaches the freezing level in the atmosphere.

5. The method of any one of claims 1-4, wherein the container is re-filled with salt containing water which is separated into substantially salt free ice and brine when the container reaches the freezing level in the atmosphere.

6. The method of claim 5, wherein the ice is converted into fresh water after the container has descended to the earth surface.

7. The method of any one of claims 1-6, wherein the first and second balloons are hot air balloons in which the air is heated after the container carried thereby has been re-filled with water.

8. The method of any one of claims 1-6, wherein the first and second balloons are filled with a medium that has a lower density than air at ambient temperatures and more of the medium is injected into the balloon after the container carried thereby has been re-filled with water.

9. A system for converting water into ice, the system comprising:
- a first container that is configured to be at least partially filled with water and to be carried by a first balloon that is filled with a medium with a lower density than ambient air in the atmosphere;
- a second container that is configured to be at least partially filled with water and to be carried by a second balloon that is filled with a medium with a lower density than ambient air in the atmosphere;
- an U-shaped connection cable that interconnects the first and second balloon via an U-shaped connection cable and that runs via a pulley assembly at the earth surface;
- means for cyclically inducing one of the balloons to lift one of the containers to an altitude above a freezing level in the atmosphere thereby converting the water in that container into ice and to simultaneously induce the U-shaped connection cable to pull the other balloon and water container back to the earth surface; and
- means for removing the ice from the descended container generated by prior lifting of the descended container to the altitude above the freezing level in the atmosphere; and
- means for re-filling the descended container with water.

10. The system of claim 9, wherein the pulley assembly comprises a pair of pulleys mounted at a selected mutual distance at the earth surface such that the risk of entangling of the U-shaped cable sections and collision of the balloons and containers is minimized.

11. The system of claim 9 or 10, wherein the length of the U-shaped connection cable is adjustable to the altitude of the freezing level in the atmosphere.

12. The system of any one of claims 9-11, wherein the first and second containers are made of a flexible material, which is configured to absorb expansion of the freezing water when the container reaches the freezing level in the atmosphere.

13. The system of any one of claims 9-12, wherein the first and second balloons are hot air balloons.

14. The system of any one of claims 9-12, wherein the first and second balloons are filled with a medium that has a lower density than air at ambient temperatures.

15. The system of claim 14, wherein the medium comprises helium.
